# EUROPEAN PATENT APPLICATION

(11) **EP 4 317 226 A1**
(43) Date of publication of application: **07.02.2024**
(21) Application number: 22780639.5
(22) Date of filing: 25.03.2022
(51) Int. Cl.: C08F 220/26, B32B 27/00, C08F 8/00

(54) **SURFACE-MODIFIED LAYER, SURFACE-MODIFIED SHEET, MULTILAYER MATERIAL, SURFACE-MODIFIED MEMBER, PAINTED ARTICLE, METHOD FOR PRODUCING SURFACE-MODIFIED MEMBER, AND METHOD FOR PRODUCING PAINTED ARTICLE**

(30) Priority: 29.03.2021 JP 2021055600
(71) Applicant: NITTO DENKO CORPORATION, Ibaraki-shi Osaka 567-8680 (JP)
(72) Inventor: NAKAO Eriko, Ibaraki-shi, Osaka 567-8680 (JP); ISHIGURO Shigeki, Ibaraki-shi, Osaka 567-8680 (JP); TAKAHASHI Tomokazu, Ibaraki-shi, Osaka 567-8680 (JP); OBAN Ryohei, Ibaraki-shi, Osaka 567-8680 (JP); ENDO Asuka, Ibaraki-shi, Osaka 567-8680 (JP); SHIMOKAWA Kayo, Ibaraki-shi, Osaka 567-8680 (JP)
(74) Representative: Müller-Boré & Partner Patentanwälte PartG mbB
(86) International application number: PCT/JP2022/014674
(87) International publication number: WO 2022/210426

(57) **Abstract**

The present invention relates to a surface-modifying layer including a polymeric component having a hydroxyl group and an unsaturated hydrocarbon group, in which a molar ratio of the unsaturated hydrocarbon group to the hydroxyl group is 0.01 or more and less than 1, a surface-modifying sheet including the surface-modifying layer and a release sheet, a laminate, a surface-modified member and a coated article, in which the surface-modifying sheet is used, a method for producing a surface-modified member, and a method for producing a coated article.

## Description

### TECHNICAL FIELD

The present invention relates to a surface-modifying layer, a surface-modifying sheet, a laminate, a surface-modified member, a coated article, a method for producing the surface-modified member, and a method for producing the coated article.

### BACKGROUND ART

Nowadays, resins which are lightweight and have excellent impact resistance are used in members of transporting machines such as railroad cars, aircrafts, ships, and motor vehicles, electronic appliances, housing equipment, and the like, and surfaces thereof have adherends of various materials bonded thereto. Such resin members have coating films having various functions.

For example, a resin member in which an unsaturated polyester resin, which is a kind of heat-curable resin, is used as a matrix resin is used for bathtubs and automotive exterior applications, and in particular, when the resin member is used for the automotive exterior application, an unsaturated polyester resin member on which a coating film made of a coating material is formed is used.

In cases in which a resin member is bonded to a metal or another resin, it is necessary to attain sufficient adhesion. Rubber epoxy-based curable resin compositions are known as such adhesives in the related art.

However, resin members have a poor affinity for adhesives and sufficient bonding strength is not obtained with adhesives or adhesive sheets in the related art. Furthermore, resin members having excellent strength, such as fiber composite materials, are required to have a high level of bonding strength.

For this reason, it is necessary, for bonding of the resin members, to apply a primer solution or to perform various surface treatments including sandblasting, corona treatment, and plasma treatment as pretreatments before the application of the primer solution. In such a surface-treatment method, since the number of steps increases and productivity decreases, there is also a problem in cost.

One method for imparting sufficient bonding strength to a resin member by performing an adhesion-facilitating treatment is a technique in which a surface-modifying sheet is used.

For example, Patent Literature 1 describes a surface-modifying sheet capable of imparting sufficient bonding strength to a thermoplastic resin.

Furthermore, Patent Literatures 2 and 3 disclose surface-modifying sheets capable of imparting sufficient bonding strength to heat-curable resins such as thermosetting elastomers and silicone rubbers.

### CITATION LIST

### PATENT LITERATURE

Patent Literature 1: JP2017-128722A
Patent Literature 2: JP2019-194015A
Patent Literature 3: JP2021-020410A

### SUMMARY OF INVENTION

### TECHNICAL PROBLEM

However, in the related art, by using a surface-modifying sheet, a surface treatment process of the resin member can be simplified, and adhesiveness to a specific coating film such as an adhesive is improved, but for example, when the coating film provided on a heat-curable resin member is a coating material, a new problem has been found that bonding strength between the resin member and the coating film may be insufficient.

In view of the above problems, an object of the present invention is to provide a smooth surface-modifying layer which is excellent in bonding strength, particularly bonding strength to a coating material, prevents an occurrence of unevenness, and has a uniform thickness, and a surface-modifying sheet capable of integrally shaping the surface-modifying layer and a resin member when forming the surface-modified member. Other objects are to provide a laminate, a surface-modified member, and a coated article which are obtained using the surface-modifying layer or the surface-modifying sheet, and to provide a method for producing the surface-modified member and a method for producing the coated article.

### SOLUTION TO PROBLEM

The present inventors diligently made investigations in order to solve the problem. As a result, the present inventors have found that when the surface-modifying layer is formed into a sheet shape and the surface-modifying layer contains a polymer containing a hydroxyl group and an unsaturated hydrocarbon group at a specific ratio, a smooth surface-modifying layer which has excellent bonding strength, prevents an occurrence of unevenness, and has a uniform thickness can be formed, and the surface-modifying layer and a resin member can be integrally shaped at the time of forming a surface-modified member, thereby completing the present invention.

Methods for solving the problems are as follows.
[1] A surface-modifying layer including:
   a polymeric component having a hydroxyl group and an unsaturated hydrocarbon group, in which
   a molar ratio of the unsaturated hydrocarbon group to the hydroxyl group is 0.01 or more and less than 1.
[2] The surface-modifying layer according to [1], including:
   the polymeric component having the hydroxyl group and the unsaturated hydrocarbon group, in which
   the molar ratio of the unsaturated hydrocarbon group to the hydroxyl group is 0.01 or more and less than 0.5.
[3] The surface-modifying layer according to [1] or [2], in which
   the unsaturated hydrocarbon group is a functional group derived from an unsaturated hydrocarbon group-containing isocyanate compound.
[4] The surface-modifying layer according to [3], in which
   the unsaturated hydrocarbon group-containing isocyanate compound is 2-methacryloyloxyethyl isocyanate.
[5] A surface-modifying sheet including:
   the surface-modifying layer according to any one of [1] to [4] and a release sheet.
[6] A laminate in which
   the surface-modifying layer according to any one of [1] to [4] is laminated to at least a part of a surface of a resin material.
[7] A surface-modified member in which
   the surface-modifying layer according to any one of [1] to [4] is laminated to at least a part of a surface of a resin member, and
   the resin member and the surface-modifying layer are covalently bonded by a chemical reaction.
[8] The surface-modified member according to [7], in which
   the resin member contains an unsaturated hydrocarbon group-containing heat-curable resin.
[9] The surface-modified member according to [8], in which
   the unsaturated hydrocarbon group-containing heat-curable resin is an unsaturated polyester resin.
[10] A coated article in which
   a coating film is provided to at least a part of the surface-modified member according to any one of [7] to [9].
[11] The coated article according to [10], in which
   the coating film contains a coating material having a functional group that forms a chemical bond or interacts intermolecularly with the hydroxyl group.
[12] A method for producing a surface-modified member using the surface-modifying layer according to any one of [1] to [4], the method including:
   a lamination step of laminating the surface-modifying layer to a resin member by heating and shaping.
[13] The method for producing a surface-modified member according to [12], in which
   the resin member contains an unsaturated polyester resin.
[14] A method for producing a surface-modified member using the surface-modifying sheet according to [5].
[15] A method for producing a coated article using the surface-modifying layer according to any one of [1] to [4], the method including:
   a step of producing a surface-modified member by laminating the surface-modifying layer on a resin member by heating and shaping and
   a step of forming a coating film on a surface-modifying-layer side of the surface-modified member.
[16] The method for producing a coated article according to [15], in which
   the resin member contains an unsaturated polyester resin.
[17] The method for producing a coated article according to [15] or [16], in which
   the coating film contains a coating material having a functional group that forms a chemical bond or interacts intermolecularly with the hydroxyl group.
[18] A method for producing a coated article using the surface-modifying sheet according to [5].

### ADVANTAGEOUS EFFECTS OF INVENTION

A surface-modifying layer according to an embodiment of the present invention has excellent bonding strength, prevents an occurrence of unevenness, and is smooth with a uniform thickness, a surface-modifying sheet according to the embodiment of the present invention can form the surface-modifying layer, and can integrally shape the surface-modifying layer and a resin member when a surface-modified member is formed.

### BRIEF DESCRIPTION OF DRAWINGS

[FIG. 1] FIG. 1 is a schematic cross-sectional view showing an example of a surface-modified member.
[FIG. 2] FIG. 2 is a schematic cross-sectional view showing an example of a surface-modifying sheet.
[FIG. 3] FIG.3 is a schematic cross-sectional view showing a form such that a surface-modifying-layer side of the surface-modifying sheet, which is a laminate of a release sheet and a surface-modifying layer, is placed on at least a part of a surface of a resin material.
[FIG. 4] FIG. 4 is a schematic cross-sectional view showing an example of a coated article.

### DESCRIPTION OF EMBODIMENTS

Embodiments of the present invention are described in detail below.

### (Surface-modifying Layer and Surface-modifying Sheet)

A surface-modifying layer according to an embodiment of the present invention includes a polymeric component having a hydroxyl group and an unsaturated hydrocarbon group, and a molar ratio of the unsaturated hydrocarbon group to the hydroxyl group is 0.01 or more and less than 1. An upper limit of the molar ratio of the unsaturated hydrocarbon group to the hydroxyl group is preferably 0.9 or less, and more preferably 0.82 or less. Further, the molar ratio of the unsaturated hydrocarbon group to the hydroxyl group is preferably 0.01 or more and less than 0.5.

A surface-modifying sheet according to an embodiment of the present invention includes the surface-modifying layer and a release sheet.

The polymeric component contained in the surface-modifying layer according to the embodiment of the present invention is an addition reaction product of a prepolymer having a unit derived from a hydroxyl group-containing monomer and an unsaturated hydrocarbon group-containing compound, and a molar ratio of the unsaturated hydrocarbon group-containing compound to the hydroxyl group-containing monomer used in a synthesis of the prepolymer is preferably 0.01 or more and less than 0.5.

In the surface-modifying sheet according to the embodiment of the present invention, the surface-modifying layer is sheet-shaped; thus, the surface-modifying layer is not disposed by coating on a surface of a resin member, but can be integrally shaped therewith through a heat treatment while being placed on a resin material. Because of this, an occurrence of unevenness due to cissing and the like can be prevented and the surface-modifying layer can be formed in an even thickness on the surface of the resin member. In a case in which the surface-modifying layer is formed on a part of the surface of the resin member, a decrease in yield due to protrusion or the like can be prevented.

As described later, the surface-modifying sheet according to the embodiment of the present invention is suitably used for producing a surface-modified member using a resin member containing an unsaturated hydrocarbon group-containing heat-curable resin. When the surface-modifying layer contains the polymeric component having the specific ratio of the hydroxyl group and the unsaturated hydrocarbon group, the unsaturated hydrocarbon group of the polymeric component and an unsaturated hydrocarbon group of the heat-curable resin in the resin member form a covalent bond by a chemical reaction, and thus it is presumed that the bonding strength between the surface-modifying layer and the resin member is improved.

Further, when a coating film provided on the surface-modifying layer contains a coating material having a functional group capable of reacting with or interacting with the hydroxyl group, such as a urethane coating material, at boundary portions of the surface-modifying layer and the coating film, the hydroxyl group in the polymeric component and the functional group in the coating material form a chemical bond or interact intermolecularly, whereby bonding strength between the surface-modifying layer and the coating film can be improved.

Examples of the chemical bond include a covalent bond, an ionic bond, and a metallic bond. Examples of the intermolecular interaction include a hydrogen bond, an electrostatic interaction, an aromatic ring interaction, and a van der Waals force. In terms of bonding power, the covalent bond > the ionic bond > the metallic bond > the intermolecular interaction, and from the viewpoint of improving adhesion between the surface-modifying layer and the coating film, it is preferable to form the covalent bond at the boundary portions of the surface-modifying layer and the coating film.

### <Surface-modifying Layer>

### (Polymeric component)

The polymeric component contained in the surface-modifying layer (which may be a material of the surface-modifying layer) has the hydroxyl group and the unsaturated hydrocarbon group, and the molar ratio of the unsaturated hydrocarbon group to the hydroxyl group is 0.01 or more and less than 1.

The polymeric component can be obtained by subjecting the prepolymer having the unit derived from the hydroxyl group-containing monomer and the unsaturated hydrocarbon group-containing compound to an addition reaction at a molar ratio of the unsaturated hydrocarbon group-containing compound to the hydroxyl group-containing monomer of 0.01 or more and less than 0.5.

The polymeric component is the addition reaction product of the prepolymer having the unit derived from the hydroxyl group-containing monomer and the unsaturated hydrocarbon group-containing compound, and the molar ratio of the unsaturated hydrocarbon group-containing compound to the hydroxyl group-containing monomer used in the prepolymer synthesis is preferably 0.01 or more and less than 0.5.

### (Prepolymer Having Unit Derived From Hydroxyl Group-containing Monomer)

When the polymeric component is the addition reaction product of the prepolymer having the unit derived from the hydroxyl group-containing monomer and the unsaturated hydrocarbon group-containing compound, the prepolymer forming a main chain of the polymeric component has the unit derived from the hydroxyl group-containing monomer and is obtained by polymerizing monomer components containing a hydroxyl group-containing monomer.

The prepolymer may contain, in addition to the unit derived from the hydroxyl group-containing monomer, a unit derived from a hydroxyl group-free or containing monomer.

Examples of the prepolymer include an acrylic polymer, a polyester polymer, a urethane-based polymer, a polyether-based polymer, and a polyamide-based polymer. From the viewpoint of improving the adhesion, the prepolymer is preferably an acrylic polymer.

The acrylic polymer as the prepolymer is obtained by, for example, polymerizing monomer components containing a hydroxyl group-free acrylic monomer and a hydroxyl group-containing acrylic monomer as the hydroxyl group-containing monomer, and is more preferably obtained by, for example, polymerizing monomer components containing a (meth)acrylic acid alkyl ester and a hydroxyl group-containing (meth)acrylic acid alkyl ester.

In the present specification, "(meth)acrylic acid" refers to acrylic acid and/or methacrylic acid.

Examples of the (meth)acrylic acid alkyl ester include a (meth)acrylic acid alkyl ester having a linear or branched alkyl group having 1 to 20 carbon atoms. Examples of the (meth)acrylic acid alkyl ester include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, isotridodecyl (meth)acrylate, tetradecyl (meth)acrylate, isotetradecyl (meth)acrylate, pentadecyl (meth)acrylate, hexadecyl (meth)acrylate, heptadecyl (meth)acrylate, octadecyl (meth)acrylate, isooctadecyl (meth)acrylate, nonadecyl (meth)acrylate, and eicosyl (meth)acrylate.

The (meth)acrylic acid alkyl ester may be used alone or in combination of two or more thereof.

From the viewpoint of improving the adhesion, the (meth)acrylic acid alkyl ester is preferably an (meth)acrylic acid alkyl ester having an alkyl group having 2 to 8 carbon atoms, and more preferably at least one selected from the group consisting of ethyl (meth)acrylate, butyl (meth)acrylate, and 2-ethylhexyl (meth)acrylate.

The prepolymer such as an acrylic polymer is obtained by polymerizing a hydroxyl group-free monomer such as an (meth)acrylic acid alkyl ester and the hydroxyl group-containing monomer.

Examples of a hydroxyl group-containing (meth)acrylic acid alkyl ester include 2-hydroxyethyl (meth)acrylate, 2-hydroxypropyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethyl cyclohexyl) methyl (meth)acrylate.

The hydroxyl group-containing (meth)acrylic acid alkyl ester may be used alone or in combination of two or more thereof.

The hydroxyl group-containing (meth)acrylic acid alkyl ester is preferably at least one selected from the group consisting of 2-hydroxyethyl acrylate, 2-hydroxyethyl methacrylate, 2-hydroxybutyl acrylate, and 4-hydroxybutyl (meth)acrylate.

In the monomer components, an amount of the hydroxyl group-containing monomer such as a hydroxyl group-containing (meth)acrylic acid alkyl ester is preferably 1 part by mol or more, more preferably 5 parts by mol or more, and preferably 50 parts by mol or less, and more preferably 40 parts by mol or less, based on 100 parts by mol of the total monomer components. When the hydroxyl group-containing monomer is 1 part by mol or more, an amount of the hydroxyl groups suitable for interacting with the coating material is obtained, and the adhesion to the coating material is improved. Further, when the hydroxyl group-containing monomer is 50 parts by mol or less, it is possible to prevent gelation from occurring in a polymerization process of the prepolymer and making the production difficult.

In addition to the (meth)acrylic acid alkyl ester and the hydroxyl group-containing (meth)acrylic acid alkyl ester, the monomer component may contain one or two or more other monomers (copolymerizable monomers) copolymerizable therewith. Examples of the copolymerizable monomer include a carboxyl group-containing monomer, a monomer having a nitrogen atom-containing ring, an acid anhydride monomer such as maleic anhydride and itaconic acid anhydride, a sulfonic acid group-containing monomer, an epoxy group-containing monomer, an amide group-containing monomer, an aromatic vinyl compound, a (meth)acrylic acid ester having an alicyclic hydrocarbon group, and a (meth)acrylic acid ester having an aromatic hydrocarbon group.

When the copolymerizable monomer is contained in the monomer components, a content of the copolymerizable monomer is preferably 1 part by mol or more, more preferably 5 parts by mol or more, and is preferably 50 parts by mol or less, and more preferably 40 parts by mol or less as a total amount with the hydroxyl group-containing (meth)acrylic acid alkyl ester with respect to 100 parts by mol of the (meth)acrylic acid alkyl ester.

Examples of a carboxyl group-containing monomer include acrylic acid, methacrylic acid, carboxyethyl acrylate, carboxypentyl acrylate, itaconic acid, maleic acid, fumaric acid, crotonic acid, and isocrotonic acid.

Examples of a monomer having a nitrogen atom-containing ring include N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinylmorpholine, and N-vinylisothiazole.

Examples of a sulfonic acid group-containing monomer include styrenesulfonic acid, allyl sulfonic acid, sodium vinylsulfonate, 2-(meth)acrylamido-2-methylpropanesulfonic acid, (meth)acrylamidopropanesulfonic acid, sulfopropyl (meth)acrylate, and (meth)acryloyloxy naphthalenesulfonic acid.

Examples of an epoxy group-containing monomer include epoxy group-containing acrylates such as glycidyl (meth)acrylate and (meth)acrylic acid-2-ethyl glycidyl ether, allyl glycidyl ether, and (meth)acrylic acid glycidyl ether.

Examples of an amide group-containing monomer include (meth)acrylamide, N-alkyl(meth)acrylamide, N,N-dialkyl(meth)acrylamide, and N-(meth)acryloylmorpholine. Examples of N-alkyl(meth)acrylamide include N-ethyl(meth)acrylamide, N-isopropyl(meth)acrylamide, and N-butyl(meth)acrylamide. Examples of N,N-dialkyl(meth)acrylamide include N,N-dimethyl(meth)acrylamide, N,N-diethyl(meth)acrylamide, N,N-dipropyl(meth)acrylamide, and N,N-diisopropyl(meth)acrylamide.

Examples of an aromatic vinyl compound include styrene, α-methylstyrene, and vinyl toluene.

Examples of a (meth)acrylic acid ester having an alicyclic hydrocarbon group include cyclopentyl (meth)acrylate, cyclohexyl (meth)acrylate, isobomyl(meth)acrylate, and dicyclopentanyl (meth)acrylate.

Examples of a (meth)acrylic acid ester having an aromatic hydrocarbon group include phenyl (meth)acrylate, phenoxyethyl (meth)acrylate, and benzyl (meth)acrylate.

The acrylic polymer as the prepolymer can be formed by polymerizing the monomer components described above. Examples of a polymerization method include solution polymerization, bulk polymerization, and emulsion polymerization, and the polymerization method is preferably solution polymerization. In the solution polymerization, for example, a monomer component and a polymerization initiator are blended in a solvent to prepare a reaction solution, and then the reaction solution is heated. Further, through a polymerization reaction of the monomer components in the reaction solution, a prepolymer solution which contains the prepolymer can be obtained. As the polymerization initiator, a thermal polymerization initiator and a photopolymerization initiator can be used depending on the polymerization method. A use amount of the polymerization initiator is, for example, 0.01 parts by mass or more, and for example, 5 parts by mass or less with respect to 100 parts by mass of the monomer components.

Examples of the thermal polymerization initiator include an azo-based polymerization initiator, a peroxide-based polymerization initiator, and a persulfate such as potassium persulfate. Examples of an azo-based polymerization initiator include 2,2'-azobisisobutyronitrile, 2,2'-azobis-2-methylbutyronitrile, 2,2'-azobis(2-methylpropionic acid) dimethyl, 4,4'-azobis-4-cyanovaleric acid, azobisisovaleronitrile, and 2,2'-azobis(2-amidinopropane) dihydrochloride. Examples of a peroxide-based polymerization initiator include dibenzoyl peroxide, t-butyl permaleate, and lauroyl peroxide.

Examples of the photopolymerization initiator include a benzoic ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, a thioxanthone-based photopolymerization initiator, and an acylphosphine oxide-based photopolymerization initiator.

### (Unsaturated Hydrocarbon Group)

The polymeric component contained in the surface-modifying layer according to the embodiment of the present invention contains a polymeric component having the hydroxyl group and the unsaturated hydrocarbon group. The unsaturated hydrocarbon group is preferably a functional group derived from an unsaturated hydrocarbon group-containing isocyanate compound.

The polymeric component contained in the surface-modifying layer according to the embodiment of the present invention may be the addition reaction product of the prepolymer having the unit derived from the above-described hydroxyl group-containing monomer and the unsaturated hydrocarbon group-containing compound.

The unsaturated hydrocarbon group-containing compound has a predetermined functional group capable of reacting with the hydroxyl group to bond, and a side chain containing the unsaturated hydrocarbon group derived from the unsaturated hydrocarbon group-containing compound is introduced into the prepolymer by the reaction of the hydroxyl group in the prepolymer with the functional group in the unsaturated hydrocarbon group-containing compound, thereby obtaining the polymeric component.

The functional group contained in the unsaturated hydrocarbon group-containing compound is preferably an isocyanate group. That is, the unsaturated hydrocarbon group-containing compound is preferably the unsaturated hydrocarbon group-containing isocyanate compound.

Examples of the unsaturated hydrocarbon group-containing isocyanate compound include 2-methacryloyloxyethyl isocyanate (MOI) and 3-isopropenyl-α,α-dimethylbenzyl isocyanate. From the viewpoint of ease of introduction of the unsaturated hydrocarbon group into the polymer side chain, the unsaturated hydrocarbon group-containing isocyanate compound is preferably MOI.

The polymeric component used in the embodiment of the present invention is the addition reaction product of the prepolymer obtained by polymerizing the monomer components containing the hydroxyl group-containing monomer as described above and the unsaturated hydrocarbon group-containing compound, and is obtained by subjecting the prepolymer and the unsaturated hydrocarbon group-containing compound to the addition reaction in such blending amounts that the hydroxyl group in the prepolymer and the functional group in the unsaturated hydrocarbon group-containing compound have a predetermined ratio.

In the addition reaction, a reaction temperature is, for example, 40°C to 60°C, and a reaction time is, for example, 4 hours to 6 hours. Further, an addition reaction catalyst may be used in the reaction. When the functional group in the unsaturated hydrocarbon group-containing compound is the isocyanate group, for example, dibutyltin dilaurate can be used as the addition reaction catalyst. A use amount of the addition reaction catalyst is, for example, 0.3 to 0.6 parts by mass with respect to 100 parts by mass of the unsaturated hydrocarbon group-containing compound.

The polymeric component can be obtained as the polymer solution containing the polymeric component by, for example, preparing a reaction solution by adding the unsaturated hydrocarbon group-containing compound and the addition reaction catalyst to the prepolymer solution containing the prepolymer described above and subjecting the reaction solution to the addition reaction.

In the polymeric component contained in the surface-modifying layer according to the embodiment of the present invention, the molar ratio (unsaturated hydrocarbon group-containing compound/hydroxyl group-containing monomer) of the unsaturated hydrocarbon group-containing compound to the hydroxyl group-containing monomer used in the prepolymer synthesis is preferably 0.01 or more and less than 0.5.

When the ratio is less than 0.01, the unsaturated hydrocarbon group is not sufficiently introduced into the polymeric component, and it is difficult to obtain the effect of improving the adhesion between the resin member and the surface-modifying layer. Further, when the molar ratio is 0.5 or more, the hydroxyl group in the prepolymer is excessively consumed in the addition reaction, the amount of the hydroxyl group in the polymeric component becomes insufficient, and the effect of improving the adhesion between the surface-modifying layer and the coating film is hardly obtained. In the present invention, by setting the ratio within the above range, both the adhesion between the resin member and the surface-modifying layer and the adhesion between the surface-modifying layer and the coating film are improved.

The ratio is preferably 0.02 or more, more preferably 0.05 or more, and still more preferably 0.1 or more from the viewpoint of the adhesion to the resin member. Further, from the viewpoint of the adhesion to the coating material, the ratio is preferably 0.48 or less, more preferably 0.45 or less, and still more preferably 0.4 or less.

The above ratio is a molar ratio of the unsaturated hydrocarbon group-containing compound to the hydroxyl group-containing monomer used in the prepolymer synthesis, and is not a molar ratio of the unsaturated hydrocarbon group to the hydroxyl group contained in the polymeric component.

When X parts by mol of the hydroxyl group-containing monomer and Y parts by mol of the unsaturated hydrocarbon group-containing compound are used, the molar ratio of the unsaturated hydrocarbon group-containing compound to the hydroxyl group-containing monomer is Y/X, and the molar ratio of the unsaturated hydrocarbon group to the hydroxyl group in the obtained polymeric component is Y/(X - Y).

When the molar ratio Y/X of the unsaturated hydrocarbon group-containing compound to the hydroxyl group-containing monomer is less than 0.5, the molar ratio Y/(X - Y) of the unsaturated hydrocarbon group to the hydroxyl group in the polymeric component is calculated to be less than 1.0.

As described above, the molar ratio of the unsaturated hydrocarbon group to the hydroxyl group in the polymeric component can be calculated as a calculated value from the amount of the hydroxyl group-containing monomer used for polymerization and the amount of the unsaturated hydrocarbon group-containing compound. Further, the calculated value and a measured value are close to each other.

The measured value can be obtained by analyzing a molecular weight and a composition ratio of the polymeric component using GPC, FT-IR, FT-NMR, or the like.

For example, with respect to the following samples, as a result of measuring the molecular weight and the composition ratio of the polymeric component by the following method, a composition ratio of the monomer and a composition ratio of a constituent unit derived from the monomer are almost matched. From this result, it can be said that the composition ratio of the constituent unit derived from the monomer in the polymeric component can be calculated from a charged composition ratio (molar ratio) of the monomer used for the polymerization. That is, it can be said that the molar ratio of the unsaturated hydrocarbon group to the hydroxyl group in the obtained polymeric component can be calculated from the amount of the hydroxyl group-containing monomer and the amount of the unsaturated hydrocarbon group-containing compound.

### (Method for Measuring Molecular Weight and Composition Ratio of Polymeric Component)

1) In a screw bottle was placed 975 mg of a sample solution prepared in the same manner as polymeric component 6 in Examples, and purged with nitrogen at 60°C for 3 hours to remove ethyl acetate as a solvent, thereby obtaining an air-dried sample.
2) After a 1.0 g/L THF solution of the air-dried sample was prepared and allowed to stand overnight, GPC measurement was performed on a filtrate obtained by filtering this solution through a 0.45 µm membrane filter. As a result, a weight average molecular weight (Mw) was 1.63 × 10⁶.

### (GPC Measurement Conditions)

Column: TSKgel GMH-H(S) × 2
Column size: 7.8 mm I.D. × 300 mm
Eluent: THF
Flow rate: 0.5 mL/min
Detector: RI
Column temperature: 40°C
Introduction volume: 100 µL
* A molecular weight was calculated in terms of polystyrene.

3) The sample solution was placed on a prism, and FT-IR measurement was performed immediately thereafter.

### (FT-IR Measurement Conditions)

Measurement method: one-time reflection ATR method (Smart iTR, Dia 45°)
Resolution: 4 cm⁻¹
Detector: DTGS
Cumulative number: 64 times

4) In 0.6 mL of CDCl₃ was dissolved 8.57 mg of the air-dried sample, followed by ¹H-NMR measurement.

### (FT-NMR Measurement Conditions)

Observation frequency: 600 MHz
Measurement solvent: CDCl₃
Measurement temperature: room temperature
Chemical shift standard: 7.25 ppm (measurement solvent)

When the charged monomers are polymerized with 2-ethylhexyl acrylate (2EHA) monomer (100 parts by mol):hydroxyl group-containing monomer (HEA: 2-hydroxyethyl acrylate) (X parts by mol):unsaturated hydrocarbon group-containing monomer (MOI) (Y parts by mol) = 100:20:8 to obtain the polymeric component 6, it is calculated constituent units derived from 2EHA (100 mol parts):an amount of hydroxyl groups (X - Y parts by mol):an amount of unsaturated hydrocarbon groups (Y parts by mol) = 100: 12:8 (parts by mol) in the polymeric component.

According to the above measurement, when the obtained polymeric component 6 was measured, a result of the constituent units derived from 2EHA:the amount of hydroxyl groups:the amount of unsaturated hydrocarbon groups = 100:14.63:7.32 (parts by mol) was obtained, and the calculated value and the measured value were close to each other.

The weight average molecular weight (Mw) of the polymeric component is preferably 100,000 or more, and more preferably 300,000 or more, from the viewpoint of film formability and processability, and is preferably 5,000,000 or less, and more preferably 3,000,000 or less, from the viewpoint of applicability of a surface-modifying composition containing the polymeric component.

The weight average molecular weight of the polymeric component is measured by gel permeation chromatography (GPC) and calculated in terms of polystyrene.

The content of the polymeric component in the surface-modifying layer is preferably 50 mass% to 100 mass%, more preferably 70 mass% to 100 mass%, still more preferably 90 mass% to 100 mass%, particularly preferably 92 mass% to 100 mass%, and most preferably 95 mass% to 100 mass%.

The surface-modifying layer (may be a material of the surface-modifying layer) may contain other components as necessary together with the polymeric component. Examples of the other components include a pH regulator, a crosslinking agent, a viscosity regulator (for example, a thickener), a leveling agent, a release regulator, a plasticizer, a softener, a filler, a colorant (for example, a pigment and a dye), a surfactant, an antistatic agent, an antiseptic, an aging inhibitor, an ultraviolet absorber, an antioxidant, and a light stabilizer.

The thickness of the surface-modifying layer is not particularly limited, and is 0.01 µm to 2,000 µm, more preferably 0.1 µm to 1,000 µm, still more preferably 0.5 µm to 200 µm, and particularly preferably 1 µm to 100 µm.

The thickness of the surface-modifying layer can be determined by measuring the thickness of the surface-modifying sheet with a dial thickness gauge (for example, Peacock GC-9), removing the surface-modifying layer in the portion where the thickness measurement is made, measuring a thickness of the release sheet in that portion, and taking a difference therebetween as the thickness of the surface-modifying layer.

An average thickness of the surface-modifying layer is an average of values measured on ten points.

### <Release Sheet>

The release sheet is not particularly limited. However, the release sheet preferably has heat resistance of 100°C or higher and preferably has a tensile modulus at 100°C of 1 GPa or lower. Although the release sheet may be either a non-silicone resin sheet or a silicone resin sheet, it is preferably a non-silicone resin sheet. Examples thereof include a fluororesin sheet film (Nitoflon, manufactured by Nitto Denko Corp.), a polyester-based resin sheet, a polymethylpentene-based resin sheet (Opulent (registered trademark), manufactured by Mitsui Chemical Tohcello, Inc.), a polystyrene-based resin sheet (Oidys (registered trademark), manufactured by Kurabo Industries Ltd.), a polyamide-based resin sheet, and a polyolefin-based resin sheet.

More specific examples of the release sheet usable in the surface-modifying sheet include unstretched polyamide-6, unstretched polyamide-66, biaxially stretched polyamide-6, biaxially stretched polyamide-66, biaxially stretched polypropylene, biaxially stretched polyethylene terephthalate), biaxially stretched poly(butylene terephthalate), easy-to-shape polyethylene terephthalate), cast-shaped polytetrafluoroethylene, an unstretched extrusion-shaped tetrafluoroethylene/ethylene copolymer (ETFE), an unstretched extrusion-shaped tetrafluoroethylene/perfluoroalkoxyethylene copolymer (PFA), an unstretched extrusion-shaped tetrafluoroethylene/hexafluoropropylene copolymer (FEP), and laminated articles including these as main layers.

The thickness of the release sheet is preferably 1 µm to 1,000 µm, more preferably 10 µm to 500 µm, still more preferably 20 µm to 300 µm, and particularly preferably 30 µm to 100 µm from the viewpoint of conformability to shapes.

According to need, the surface of the release sheet which is to face the surface-modifying layer or both surfaces of the release sheet may be subjected to a release treatment with a suitable releasing agent, for example, silicone.

### (Production of Surface-modifying Sheet)

The surface-modifying sheet can be produced by any suitable method. Examples thereof include: a method in which a release sheet is dipped in a solution (surface-modifying composition) including a solvent and a material for a surface-modifying layer and it is thereafter dried according to need; a method in which a solution including a solvent and a material for a surface-modifying layer is applied to a surface of a release sheet with a brush and it is thereafter dried according to need; a method in which a solution including a solvent and a material for a surface-modifying layer is applied to a surface of a release sheet with any of various coaters and it is thereafter dried according to need; and a method in which a solution including a solvent and a material for a surface-modifying layer is applied to a surface of a release sheet by spraying and it is thereafter dried according to need.

Examples of the surface-modifying composition include a solution obtained by dissolving a material for the surface-modifying layer in a solvent.

Examples of the solvent include: water; alcohols such as methanol, ethanol, and isopropyl alcohol (IPA); ketones such as methyl ethyl ketone; esters such as ethyl acetate; aliphatic, alicyclic, and aromatic hydrocarbons; halogenated hydrocarbons; amides such as dimethylformamide; sulfoxides such as dimethyl sulfoxide; and ethers such as dimethyl ether and tetrahydrofuran. Only one kind of the solvent may be used, or two or more of the solvents may be used.

As the surface-modifying composition, the polymer solution containing the polymeric component obtained in the synthesis of the polymeric component is preferably used as it is.

Solid concentration of the surface-modifying composition can be suitably set in accordance with intended uses. From the viewpoint of thickness accuracy of the surface-modifying layer, the solid concentration thereof in terms of mass proportion is preferably 1 mass% to 60 mass%, more preferably 10 mass% to 50 mass%, and still more preferably 15 mass% to 40 mass%.

The surface-modifying composition may contain other components that can be contained in the surface-modifying layer together with the polymeric component described above as necessary.

For example, addition of a colorant renders the surface-modifying layer visible and this makes it easy to assess whether the surface of a resin member is modified or not. There is hence a merit in process control. Further, it also functions as a base for improving coloring of coating.

Examples of the colorant include a dye and a pigment. The colorant may be a fluorescent material which can be visually recognized in black light.

### (Laminate)

A laminate according to the embodiment of the present invention is a laminate in which the surface-modifying layer is laminated to at least a part of a surface of the resin material.

The laminate according to the embodiment of the present invention, which is the resin material having the surface-modifying layer, can be produced by laminating the surface-modifying-layer side of the surface-modifying sheet to at least a part of a surface of an unshaped resin material.

A resin contained in the resin material is preferably a heat-curable resin, and is preferably an unsaturated hydrocarbon group-containing heat-curable resin from the viewpoint of improving the adhesion between the resin member and the surface-modifying layer.

Examples of the unsaturated hydrocarbon group-containing heat-curable resin include an unsaturated polyester resin and a vinyl ester resin, and the unsaturated hydrocarbon group-containing heat-curable resin is preferably an unsaturated polyester resin.

The unsaturated hydrocarbon group-containing heat-curable resin contained in the resin material contains at least a part of an uncured unsaturated hydrocarbon group-containing heat-curable resin.

The resin material may contain a fiber-reinforced resin, and the heat-curable resin may be a fiber-reinforced heat-curable resin.

Examples of the fiber-reinforced heat-curable resin include a carbon-fiber-reinforced heat-curable resin and a glass-fiber-reinforced heat-curable resin.

The resin material preferably further contains a reactive monomer, a curing agent, and a glass fiber in addition to the unsaturated hydrocarbon group-containing heat-curable resin. The unsaturated hydrocarbon group-containing heat-curable resin such as an unsaturated polyester resin is polymerized (three-dimensionally cross-linked) by radical polymerization between an unsaturated hydrocarbon group in the heat-curable resin and the reactive monomer in the presence of the curing agent, thereby obtaining a cured product.

When the resin contained in the resin material is the unsaturated polyester resin, styrene, for example, is preferably used as the reactive monomer, and benzoyl peroxide (BPO), for example, is preferably used as the curing agent.

Examples of a shape of the resin material include a plate shape having flat surfaces, a plate shape having curved surfaces, a sheet shape, and a film shape.

The thickness of the resin material is, for example, 0.001 mm to 10 mm.

The expression "at least a part of a surface of a resin material" means at least a part of all the surfaces of the resin material. For example, in the case in which the resin material has a plate shape, sheet shape, or film shape, that expression means, for example, some of at least one surface thereof or all of at least one surface thereof.

With respect to the surface-modifying sheet and the surface-modifying layer, the above descriptions can be used as they are.

### (Surface-modified Member)

In the surface-modified member according to the embodiment of the present invention, the surface-modifying layer according to the embodiment of the present invention is laminated on at least a part of the surface of the resin member, and the resin member and the surface-modifying layer are covalently bonded to each other by a chemical reaction. Since the resin member and the surface-modifying layer form the covalent bond, the bonding strength between the resin member and the surface-modifying layer is excellent.

For the surface-modifying layer and the resin material, the above descriptions can be used as they are. The resin member is obtained by shaping the resin material, and the preferable shape and thickness of the resin member are the same as those of the resin material.

The expression "at least a part of a surface of a resin member" means at least a part of all the surfaces of the resin member. For example, in the case in which the resin member has a plate shape, sheet shape, or film shape, that expression means, for example, some of at least one surface thereof or all of at least one surface thereof.

In the surface-modified member according to the embodiment of the present invention, the resin member preferably contains the unsaturated hydrocarbon group-containing heat-curable resin, and the unsaturated hydrocarbon group-containing heat-curable resin is preferably the unsaturated polyester resin.

That is, in the surface-modified member according to the embodiment of the present invention, the unsaturated hydrocarbon group-containing heat-curable resin in the resin member and the polymeric component in the surface-modifying layer are preferably covalently bonded.

The unsaturated hydrocarbon group-containing heat-curable resin contained in the resin member contains a cured unsaturated hydrocarbon group-containing heat-curable resin, that is, a resin in which an unsaturated hydrocarbon group is consumed.

The shaping of the resin member is preferably heating and shaping. The heating and shaping may be conducted simultaneously with the lamination of the resin material and the surface-modifying sheet or may be conducted after the surface-modifying sheet is laminated on the resin material.

By performing a surface treatment of the resin member by such a method, sufficient bonding strength can be imparted to the resin member and the surface-modified member can be highly efficiently produced at a low cost. A method for producing the surface-modified member can be also a method for treating a surface of a resin member (surface-treatment method for a resin).

### (Method for Producing Surface-modified Member)

The method for producing the surface-modified member according to the embodiment of the present invention is not particularly limited. For example, the surface-modifying sheet, which is a laminate including the release sheet and the surface-modifying layer, is placed on at least a part of a surface of a resin material such that the surface-modifying layer faces the resin material, and the resin material and the surface-modifying layer are heated and shaped. Thus, the surface-modified member can be produced.

Boundary portions of the surface-modifying layer and the resin material are brought into contact with each other in a molten state by the heating and shaping, and the polymeric component contained in the surface-modifying layer chemically reacts with a resin contained in the resin material, whereby the surface-modified member in which the resin member and the surface-modifying layer are covalently bonded can be formed.

The heating and shaping may be conducted simultaneously with the placement of the surface-modifying sheet or may be conducted after the surface-modifying sheet is placed.

By performing the surface treatment of the resin member by such a method, the sufficient bonding strength can be imparted to the resin member and the surface-modified member can be highly efficiently produced at a low cost. The method for producing the surface-modified member can be also the method for treating the surface of the resin member (surface-treatment method for a resin member).

With respect to the resin member, the surface-modifying sheet, the release sheet, and the surface-modifying layer, the above descriptions can be used as they are.

In the production of the surface-modified member, when a curing temperature of the heat-curable resin contained in the resin member is set as T₂°C, it is preferred to dispose the surface-modifying layer on at least a part of a surface of the resin material containing the heat-curable resin and conduct the heating and shaping at a temperature of T₁°C or higher. The curing temperature is a temperature within an exothermic temperature range of a heat flow curve of an uncured heat-curable resin measured by differential scanning calorimetry (DSC).

A heat-shaping temperature is preferably T₁°C to T₃°C, more preferably (T₁ + 10)°C to (T₃ - 10)°C, and still more preferably (T₁ + 20)°C to (T₃ -20)°C.

Here, T₁ is a temperature (°C) at which an exothermic reaction starts when the uncured heat-curable resin is measured by DSC, and T₃ is a temperature (°C) at which the exothermic reaction ends.

By setting the heat-shaping temperature within the above range and performing the surface treatment of the resin member by the above-described method, the boundary portions of the surface-modifying layer and the resin member are brought into contact with each other in the molten state to form the covalent bond by the chemical reaction, and the surface-modifying layer having excellent bonding strength to the coating film can be imparted to the resin member. Further, this impartation can be attained with high production efficiency and at a low cost.

The method for producing the surface-modified member according to the embodiment of the present invention is a method for producing the surface-modified member using the above-described surface-modifying layer, and may include a lamination step of laminating the surface-modifying layer on the resin member by the heating and shaping.

The resin member preferably contains the unsaturated hydrocarbon group-containing heat-curable resin, and more preferably contains the unsaturated polyester resin.

The method for producing the surface-modified member according to the embodiment of the present invention may be a method for manufacturing the surface-modified member using the above-described surface-modifying sheet.

Examples of methods for the heating and shaping include compression shaping, transfer shaping, injection shaping, and the like. The method is preferably resin shaping, and more preferably compression shaping. When the heat-curable resin is the fiber-reinforced heat-curable resin, examples of a shaping method include a hand lay up method, a spray-up method, filament winding method, a pultrusion shaping method, a sheet mold compound method, a bulk mold compound method, a resin transfer method, and the like.

In one mode of compression shaping, for example, the surface-modifying sheet is placed on at least a part of a surface of a resin member in a shaping machine (for example, a press) such that the surface-modifying layer of the surface-modifying sheet faces the resin member, and the resin member and the surface-modifying sheet are subjected to shaping accompanied with heating (for example, integral shaping by heat pressing). In this mode, since the surface treatment of the resin member can be conducted simultaneously with shaping of the resin member, it is possible to provide high production efficiency and a low cost. Shaping pressure at the time of the compression shaping is preferably 1 MPa or more, more preferably 2 MPa or more, and still more preferably 3 MPa or more, from the viewpoint of deforming a molded article by a mold. From the viewpoint of maintaining a resin amount of the molded article, the pressure is preferably 30 MPa or less, more preferably 25 MPa or less, and still more preferably 20 MPa or less.

The shaping of the resin member may be injection shaping.

In the injection shaping, use can be made of an injection molding machine equipped with a movable mold half and a fixed mold half. For example, the surface-modifying sheet is placed on a recessed portion of a cavity of the movable mold half such that the release sheet faces the recessed portion, and the movable mold half and the fixed mold half are clamped. Subsequently, a molten resin is injected into the cavity.

The resin is then cooled and solidified in the mold before the movable mold half is separated from the fixed mold half. Thus, the surface-modified member is obtained in which the surface-modifying sheet has been united with the resin member.

By peeling the release sheet from the surface-modified member, a surface-modified member including the surface-modifying layer provided to a surface thereof is obtained. The peeling of the release sheet is not particularly limited, and the release sheet may be, for example, peeled off by hand or peeled off using a peeling apparatus therefor. The release sheet can be placed immediately before the coating. Accordingly, contamination of the surface of the surface-modifying layer can be prevented.

After the surface-modifying-layer side of the surface-modifying sheet is placed on at least a part of a surface of the resin member (may be the resin material), followed by the heating and shaping, the release sheet is preferably removed, the surface-modifying sheet being the laminate of the release sheet and the surface-modifying layer. By removing the release sheet in this way, the surface-modifying layer is transferred to the surface of the resin member, and the surface-modified member (sometimes called a multilayer member, which includes the resin member and the surface-modifying layer) is obtained.

As described above, preferably, the resin and the polymeric component of the surface-modifying layer are covalently bonded between the resin member and the surface-modifying layer.

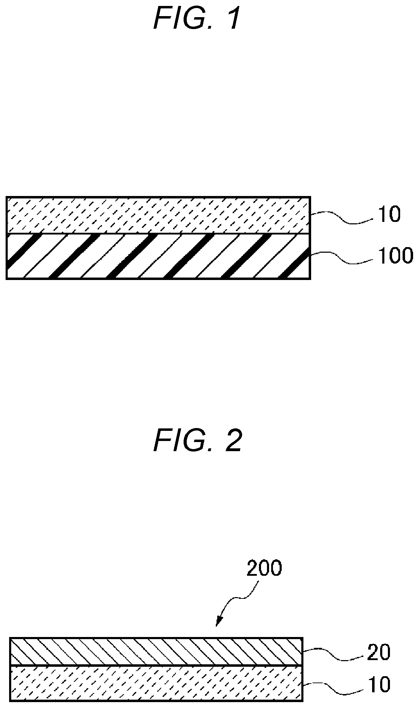

By the production method described above, a surface-modifying layer 10 is disposed on a surface of a resin member 100, thereby obtaining a surface-modified member as shown in FIG. 1.

The surface-modifying sheet, which is the laminate of the release sheet and the surface-modifying layer, is a surface-modifying sheet 200 which is a laminate of a release sheet 20 and a surface-modifying layer 10, as shown in FIG. 2.

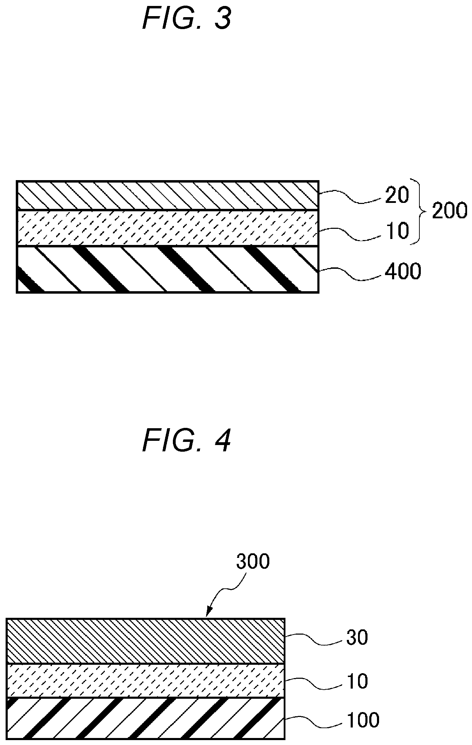

In the method for producing the surface-modified member according to the embodiment of the present invention, a form such that the surface-modifying sheet is the laminate of the release sheet and the surface-modifying layer, and that the surface-modifying-layer side of the surface-modifying sheet is placed on at least a part of a surface of the resin material is the following one: as shown in FIG. 3, the surface-modifying sheet 200 is placed on a surface of a resin material 400 such that the surface-modifying layer 10 side of the surface-modifying sheet 200 faces the surface of the resin material 400.

### (Coated Article and Method for Producing Coated Article)

The coated article according to the embodiment of the present invention is one including the surface-modified member and a coating film provided to at least a part of the surface-modified member. Preferably, the coating film has been provided to at least a part of the surface of the surface-modifying-layer side of the surface-modified member.

As an example of the coated article according to the embodiment of the present invention, FIG. 4 shows a coated article 300 including: a surface-modified member in which a surface-modifying layer 10 is disposed on a surface of a resin member 100; and a coating film 30 provided to a surface of the surface-modifying-layer side of the surface-modified member.

The coating film may be at least one film selected from among a coating, a printed layer, a vapor-deposited layer, and a plating layer.

From the viewpoint of the effect of improving the adhesion by applying the surface-modifying sheet of the present invention, the coating film preferably contains the coating material, and more preferably contains coating material having the functional group that forms the chemical bond or interacts intermolecularly with the hydroxyl group.

From the viewpoint of improving the adhesion, the functional group is preferably a functional group covalently bonded to the hydroxyl group, and is preferably the isocyanate group or an amino group.

The coating material contained in the coating film is preferably a urethane coating material or a urethane coating material such as an acryl-urethane coating material, an acrylic coating material, epoxy coating material, a silicone coating material, a polyester resin/melamine resin coating material or a fluorine coating material, and more preferably a urethane coating material.

The urethane coating material is a general term for a coating material that combine a resin (polyol) having a plurality of hydroxyl groups as a main agent and a polyisocyanate as a curing agent. The polyisocyanate is not particularly limited as long as the polyisocyanate is a compound having two or more isocyanate groups, and examples thereof include aromatic compounds such as tolylene diisocyanate, 4,4'-diphenylmethane diisocyanate, xylylene diisocyanate, and metaxylilene diisocianate; aliphatic compounds such as hexamethylene diisocyanate; alicyclic compounds such as isophorone diisocyanate; monomers thereof and burette type, nurate type, and adduct type multimers thereof.

Since the surface-modifying layer is not formed by coating to a surface of a member but is formed by using the sheet-shaped surface-modifying sheet, the occurrence of unevenness due to the cissing and the like can be prevented. Because of this, the surface-modifying layer can be formed in an even thickness on the surface of the resin member and the coating film can be coated and provided thereon in an even film thickness.

Furthermore, in cases in which the surface-modifying layer was disposed on the surface of the resin member in a molten-state or softened-state, the surface-modifying layer and the resin member are chemically bonded by heat of the surface of the resin member, and the bonding strength between the surface-modifying layer and the resin member increases; hence, the coating film having excellent adhesion can be formed. In addition, since the hydroxyl group in the polymeric component contained in the surface-modifying layer and the functional group in the coating material contained in the coating film form the chemical bond or interact intermolecularly, the bonding strength between the surface-modifying layer and the coating film also increases; hence, the coating film having extremely excellent adhesion can be formed.

Moreover, since the surface-modifying layer and the resin member can be integrally shaped in forming the coated article, there is no need of performing a treatment for removing a release agent, such as a cleaning step with an organic solvent or a polishing step, before a coating film is formed, which can bring excellent safety and mitigate environmental burden and working burden.

The thickness of the coating film is not particularly limited, and is 0.01 µm to 2,000 µm, more preferably 0.1 µm to 1,000 µm, still more preferably 0.5 µm to 500 µm, and particularly preferably 1 µm to 200 µm.

A method for producing a coated article according to the embodiment of the present invention is a method for producing a coated article using the above-described surface-modifying layer, and the method includes:
a step of producing a surface-modified member by laminating the surface-modifying layer on a resin member by heating and shaping; and
a step of forming a coating film on a surface-modifying-layer side of the surface-modified member.

The method for producing a coated article according to the embodiment of the present invention may be a method for producing a coated article using the above-described surface-modifying sheet.

The resin member preferably contains the unsaturated hydrocarbon group-containing heat-curable resin, and more preferably contains the unsaturated polyester resin.

The coating film preferably contains the coating material having the functional group that forms the chemical bond or interacts intermolecularly with the hydroxyl group.

With respect to the resin member, the surface-modifying sheet, the surface-modifying layer, and the surface-modified member, the above descriptions can be used as they are. Further, for the step of forming the surface-modified member, the description in (Method for Producing Surface-modified Member) described above can be used as it is.

Coating methods for forming the coating film are not particularly limited, and use can be made of common methods including brushing, roller coating, spray coating, and coating by various coaters. The amount in which the coating material is to be applied is not particularly limited. Further, a time period, a temperature, and the like in heating the coating film can be suitably decided in accordance with the coating material to be used, application amount, and the like.

### (Process Control Method)

In the production of the surface-modifying sheet, the surface-modified member, and the coated article according to the embodiments of the present invention, the surface-modifying layer can be rendered visible, for example, by incorporating an additive, such as a dye, a pigment, or a crystalline substance, into a surface-modifying composition or into the surface-modifying layer, making production steps easy to control.

With respect to the surface-modifying composition, surface-modifying sheet, coated article, and additive, the above descriptions can be used as they are.

Examples of process control methods include a method in which a portion colored by a surface treatment is discriminated by visually ascertaining it or by examining an image thereof captured with a camera.

### Examples

The present invention will be specifically described below by reference to examples, but the present invention is not limited to those examples in any way.

### (Evaluation)

### <Adhesion 1>

Release sheets of surface-modified members prepared in Examples and Comparative Examples were peeled off, and crosscut evaluation (crosscut peeling) was performed according to a crosscut method described in JIS K5600-5-6, and the number (attached number) of unpeeled surface-modifying layers was counted. The adhesion between the resin member and the surface-modifying layer was judged to be good (o) when the number of unpeeled surface-modifying layers out of 100 was 50 or more, and judged to be poor (x) when the number was 49 or less.
- Cutting interval: 2 mm
- Number of squares formed by crosscutting: 100
- Peeling tape: (Nichiban) Cellophane Tape (registered trademark); 24-mm wide

### <Adhesion 2>

Coated article prepared in Examples and Comparative Examples were subjected to the crosscut evaluation (crosscut peeling) by the crosscut method described in JIS K5600-5-6, and the number (attached number) of unpeeled coating films was counted. The adhesion between the surface-modifying layer and the coating film was judged to be good (o) when the number of the unpeeled coating films out of 100 was 50 or more, and judged to be poor (x) when the number was 49 or less.
- Cutting interval: 2 mm
- Number of squares formed by crosscutting: 100
- Peeling tape: (Nichiban) Cellophane Tape (registered trademark); 24-mm wide

### <Thickness of Coating Film>

A thickness of the coating film was determined with a dial gauge (GC-9, manufactured by Peacock). The coated article and the surface-modified resin member on which the coating film had not been formed were examined for thickness, and a difference therebetween was regarded as the thickness (µm) (average thickness (µm)) of the coating film. The average thickness (µm) was an average of measured values for ten points.

### <Thickness of Surface-modifying Layer>

The thickness of the surface-modifying layer was determined with the dial gauge (GC-9, manufactured by Peacock). The thickness of the surface-modifying sheet was measured. The surface-modifying layer in the portion where the thickness measurement was made was removed, and the thickness (µm) of the release sheet in that portion was measured. The difference therebetween was taken as the thickness (µm) (average thickness (µm)) of the surface-modifying layer. The average thickness (µm) was an average of measured values for ten points.

### (Example 1)

### <Synthesis of Prepolymer>

In a reaction vessel equipped with a separable cover, a separatory funnel, a thermometer, a nitrogen inlet tube, a Liebig condenser, a vacuum seal, and a stirrer, a mixture containing 100 parts by mol of 2-ethylhexyl acrylate (2EHA), 20 parts by mol of 2-hydroxyethyl acrylate (HEA), 0.5 parts by mass of 2,2'-azobisisobutyronitrile as the polymerization initiator per 100 parts by mass of these monomer components, and 150 parts by mass of ethyl acetate as a polymerization solvent per 100 parts by mass of these monomer components was stirred at 62°C for 3 hours and then at 75°C for 2 hours under a nitrogen atmosphere (polymerization reaction). Therefore, a prepolymer solution containing a hydroxyl group-containing acrylic polymer A1 as the prepolymer was obtained.

### <Synthesis of Polymeric Component>

Next, a reaction solution containing the prepolymer solution containing the hydroxyl group-containing acrylic polymer A1, 2-methacryloyloxyethyl isocyanate (MOI) (trade name: "Karenz MOI", manufactured by SHOWA DENKO K.K), and dibutyltin dilaurate (manufactured by Wako Pure Chemical) as the addition reaction catalyst was stirred at 50°C for 5 hours under an air atmosphere (addition reaction). In the reaction solution, a blending amount of MOI is 0.2 parts by mol with respect to 100 parts by mol of 2-ethylhexyl acrylate (2EHA). Further, in the reaction solution, a blending amount of dibutyltin dilaurate is 0.5 parts by mass with respect to 100 parts by mass of MOI. Through this addition reaction, a surface-modifying composition containing an acrylic polymer A2 (polymeric component 1) having a hydroxyl group and an unsaturated hydrocarbon group in a side chain and having a solid concentration of 42.2 mass% was obtained.

### (Surface-modifying Sheet (1))

The produced surface-modifying composition was filtered with a nylon sieve having an opening size of 188 µm and then applied to a release sheet (Nitoflon 900 UL, manufactured by Nitto Denko Corp.; fluororesin sheet film (polytetrafluoroethylene (PTFE) (thickness: 0.05 mm; dimensions: width 250 mm × length 450 mm))) with an applicator. The applied composition was dried in a thermostatic drying oven at 100°C for 2 minutes to produce a surface-modifying sheet (1) which is a release sheet including a surface-modifying layer.

### (Surface-modified Member (1))

A surface of a surface-modifying-layer side of the surface-modifying sheet (1) prepared as described above was placed on a resin sheet containing an unsaturated polyester resin (Kyocera Premix AP212SK2 manufactured by KYOCERA Corporation) (dimensions: width 150 mm × length 120 mm × thickness 1 mm), and compression shaping (shaping pressure 3 MPa, upper mold 145°C, lower mold 135°C, 4 minutes) using a press was performed to produce a surface-modified member (1).

### (Coated article (1))

The release sheet of the surface-modified member (1) produced above was peeled off, and V-Top H (two-pack type curable urethane coating material), manufactured by Dai Nippon Toryo Co., Ltd., was applied to the surface-modifying layer with an applicator. The coating film was cured at room temperature (25 °C) for 3 days to produce a coated article (1).

### (Examples 2 to 7)

In synthesis of polymeric components, the blending amount of MOI was changed to an amount described in Table 1 to obtain polymeric components 2 to 7. Surface-modifying sheets (2) to (7), surface-modified members (2) to (7), and coated articles (2) to (7) were produced in the same manner as in Example 1 except that the polymeric component 1 was changed to the polymeric components 2 to 7.

### (Example 8)

A surface-modifying sheet (8), a surface-modified member (8), and a coated article (8) were produced in the same manner as in Example 6 except that the obtained coated article was further stored in a high-temperature and high-humidity environment (85°C, 85% RH (relative humidity)) for 1 day.

### (Example 9)

A surface-modifying sheet (9), a surface-modified member (9), and a coated article (9) were produced in the same manner as in Example 6 except that the used urethane coating material was changed to water-based V-Top H (two-pack type curable urethane coating material) manufactured by Dai Nippon Toryo Co., Ltd.

### (Examples 10 to 16)

In synthesis of polymeric components, a blending amount of each component was changed to an amount described in Table 1 to obtain polymeric components 14 to 20. Surface-modifying sheets (10) to (16), surface-modified members (10) to (16), and coated articles (10) to (16) were produced in the same manner as in Example 1 except that the polymeric component 1 was changed to the polymeric components 14 to 20.

### (Comparative Examples 1 and 4 to 7)

In synthesis of polymeric components, the blending amount of MOI was changed to an amount described in Table 1 to obtain polymeric components 9 to 12. Surface-modifying sheets (r1) and (r4) to (r7), surface-modified members (r1) and (r4) to (r7), and coated articles (r1) and (r4) to (r7) were produced in the same manner as in Example 1 except that the polymeric component 1 was changed to the polymeric components 9 to 12.

### (Comparative Example 2)

A surface-modifying sheet (r2), a surface-modified member (r2), and a coated article (r2) were produced in the same manner as in Comparative Example 1 except that the obtained coated article was further stored at 85°C and 85% RH for 1 day.

### (Comparative Example 3)

A surface-modifying sheet (r3), a surface-modified member (r3), and a coated article (r3) were produced in the same manner as in Comparative Example 1 except that the used urethane coating material was changed to water-based V-Top H (two-pack type curable urethane coating material) manufactured by Dai Nippon Toryo Co., Ltd.

### (Comparative Example 8)

In synthesis of a prepolymer, 50 parts by mol of butyl acrylate (BA) and 50 parts by mol of ethyl acrylate (EA) were used in place of 100 parts by mol of 2-ethylhexyl acrylate (2EHA), and in the synthesis of the polymeric component, the blending amount of MOI was changed to 16.6 parts by mol per 100 parts by mol of a total amount of BA and EA, and a polymeric component 13 was obtained. A surface-modifying sheet (r8), a surface-modified member (r8), and a coated article (r8) were produced in the same manner as in Example 1 except that the polymeric component 1 was changed to the polymeric component 13.

### (Comparative Examples 9 to 12)

In synthesis of polymeric components, a blending amount of each component was changed to an amount described in Table 1 to obtain polymeric components 21 to 24. Surface-modifying sheets (r9) to (r12), surface-modified members (r9) to (r12), and coated articles (r9) to (r12) were produced in the same manner as in Example 1 except that the polymeric component 1 was changed to the polymeric components 21 to 24.

### The following Tables 1 to 3 show the Examples and Comparative Examples.

Table 1 also shows a molar ratio of an unsaturated hydrocarbon group-containing compound B (compound B) to a hydroxyl group-containing monomer A (monomer A (monomer A')) used in the prepolymer synthesis and a molar ratio (Y/(X - Y)) of an unsaturated hydrocarbon group to a hydroxyl group in a polymeric component contained in the surface-modifying layer.

### [Table 1]

**Table 1**

| Polymeric component | Main monomer (hydroxyl group-free monomer) [parts by mol] | | | Monomer A [parts by mol] | Monomer A' [parts by mol] | Compound B [parts by mol] | Compound B/ monomer A [molar ratio] |
|---|---|---|---|---|---|---|---|
| | 2EHA | BA | EA | HEA | 4HBA | MOI | |
| 1 | 100 | | | 20 | | 0.2 | 0.01 |
| 2 | 100 | | | 20 | | 0.6 | 0.03 |
| 3 | 100 | | | 20 | | 1 | 0.05 |
| 4 | 100 | | | 20 | | 2 | 0.1 |
| 5 | 100 | | | 20 | | 4 | 0.2 |
| 6 | 100 | | | 20 | | 8 | 0.4 |
| 7 | 100 | | | 20 | | 9 | 0.45 |
| 8 | 100 | | | 20 | | 10 | 0.5 |
| 9 | 100 | | | 20 | | 11 | 0.55 |
| 10 | 100 | | | 20 | | 12 | 0.6 |
| 11 | 100 | | | 20 | | 16 | 0.8 |
| 12 | 100 | | | 20 | | 20 | 1 |
| 13 | | 50 | 50 | 20 | | 16.6 | 0.83 |
| 14 | | 50 | 50 | 20 | | 8 | 0.4 |
| 15 | 100 | | | | 20 | 2 | 0.1 |
| 16 | 100 | | | | 20 | 4 | 0.2 |
| 17 | 100 | | | | 20 | 8 | 0.4 |
| 18 | | 100 | | | 20 | 2 | 0.1 |
| 19 | | 100 | | | 20 | 4 | 0.2 |
| 20 | | 100 | | | 20 | 8 | 0.4 |
| 21 | 100 | | | | 20 | 0.02 | 0.001 |
| 22 | 100 | | | | 20 | 0 | 0 |
| 23 | | 100 | | | 20 | 0.02 | 0.001 |
| 24 | | 100 | | | 20 | 0 | 0 |

| Polymeric component | Hydroxyl group-containing monomer X [parts by mol] | Unsaturated hydrocarbon group Y [parts by mol] | | Hydroxyl group X - Y in polymeric components | | Molar ratio Y/(X - Y) of unsaturated hydrocarbon group to hydroxyl group in polymeric components | |
|---|---|---|---|---|---|---|---|
| 1 | 20 | 0.2 | | 19.8 | | 0.01 | |
| 2 | 20 | 0.6 | | 19.4 | | 0.03 | |
| 3 | 20 | 1 | | 19 | | 0.05 | |
| 4 | 20 | 2 | | 18 | | 0.11 | |
| 5 | 20 | 4 | | 16 | | 0.25 | |
| 6 | 20 | 8 | | 12 | | 0.67 | |
| 7 | 20 | 9 | | 11 | | 0.82 | |
| 8 | 20 | 10 | | 10 | | 1.00 | |
| 9 | 20 | 11 | | 9 | | 1.22 | |
| 10 | 20 | 12 | | 8 | | 1.50 | |
| 11 | 20 | 16 | | 4 | | 4.00 | |
| 12 | 20 | 20 | | 0 | | - | |
| 13 | 20 | 16.6 | | 3.4 | | 4.88 | |
| 14 | 20 | 8 | | 12 | | 0.67 | |
| 15 | 20 | 2 | | 18 | | 0.11 | |
| 16 | 20 | 4 | | 16 | | 0.25 | |
| 17 | 20 | 8 | | 12 | | 0.67 | |
| 18 | 20 | 2 | | 18 | | 0.11 | |
| 19 | 20 | 4 | | 16 | | 0.25 | |
| 20 | 20 | 8 | | 12 | | 0.67 | |
| 21 | 20 | 0.02 | | 19.98 | | 0.001 | |
| 22 | 20 | 0 | | 20 | | 0 | |
| 23 | 20 | 0.02 | | 19.98 | | 0.001 | |
| 24 | 20 | 0 | | 20 | | 0 | |

### [Table 2]

**Table 2**

| | | | | Example | | | | | | | |
|---|---|---|---|---|---|---|---|---|---|---|---|
| | | | | 1 | 2 | 3 | 4 | 5 | 6 | 7 | 8 |
| Surface-modifying sheet | Surface-modifying layer | Polymeric component | | 1 | 2 | 3 | 4 | 5 | 6 | 7 | 6 |
| | | Thickness | | 25 µm | | | | | | | |
| | Release sheet | PTFE | Product number | Nitoflon No. 900 UL | | | | | | | |
| | | Thickness | | 50 µm | | | | | | | |
| Resin member | | Resin type | | Unsaturated polyester resin | | | | | | | |
| | | Product number | | Kyocera Premix AP212SK2 | | | | | | | |
| Condition for shaping surface-modified member | | Temperature | Upper mold | 145°C | | | | | | | |
| | | | Lower mold | 135°C | | | | | | | |
| | | Time | | 4 minutes | | | | | | | |
| | | Pressure | | 3 MPa | | | | | | | |
| Coating film | | Urethane coating material | Product number | V-Top H | | | | | | | |
| | | Thickness | | 25 µm | | | | | | | |
| | | Curing condition | Temperature | RT | | | | | | | |
| | | | Time | 3 days | | | | | | | |
| | | Storage of coated article in high-temperature and high-humidity environment (85°C, 85% RH, 1 dav) | | - | - | - | - | - | - | - | Yes |
| Adhesion | Crosscut peeling | Adhesion 1 resin member/surface-modifying layer | Attached number (pieces/100 pieces) | 88 | 90 | 92 | 100 | 100 | 100 | 100 | 100 |
| | | | Evaluation | ○ | ○ | ○ | ○ | ○ | ○ | ○ | ○ |
| | | Adhesion 2 surface-modifying layer/coating film | Attached number (pieces/100 pieces) | 100 | 100 | 100 | 100 | 100 | 100 | 59 | 100 |
| | | | Evaluation | ○ | ○ | ○ | ○ | ○ | ○ | ○ | ○ |

| 9 | 10 | 11 | 12 | 13 | 14 | 15 | 16 | | | | |
|---|---|---|---|---|---|---|---|---|---|---|---|
| Surface-modifying sheet | Surface-modifying layer | Polymeric component | | 6 | 14 | 15 | 16 | 17 | 18 | 19 | 20 |
| | | Thickness | | 25 µm | | | | | | | |
| | Release sheet | PTFE | Product number | Nitoflon No. 900 UL | | | | | | | |
| | | Thickness | | 50 µm | | | | | | | |
| Resin member | | Resin type | | Unsaturated polyester resin | | | | | | | |
| | | Product number | | Kyocera Premix AP212SK2 | | | | | | | |
| Condition for shaping surface-modified member | | Temperature | Upper mold | 145°C | | | | | | | |
| | | | Lower mold | 135°C | | | | | | | |
| | | Time | | 4 minutes | | | | | | | |
| | | Pressure | | 3 MPa | | | | | | | |
| Coating film | | Urethane coating material | Product number | Water-based V-Top | V-Top H | | | | | | |
| | | Thickness | | 25 µm | | | | | | | |
| | | Curing condition | Temperature | RT | | | | | | | |
| | | | Time | 3 days | | | | | | | |
| | | Storage of coated article in high-temperature and high-humidity environment (85°C, 85% RH, 1 day) | | - | - | - | - | - | - | - | - |
| Adhesion | Crosscut peeling | Adhesion 1 resin member/surface-modifying layer | Attached number (pieces/100 pieces) | 100 | 100 | 100 | 100 | 100 | 100 | 100 | 100 |
| | | | Evaluation | ○ | ○ | ○ | ○ | ○ | ○ | ○ | ○ |
| | | Adhesion 2 surface-modifying layer/coating film | Attached number (pieces/100 pieces) | 100 | 100 | 60 | 69 | 91 | 100 | 100 | 100 |
| | | | Evaluation | ○ | ○ | ○ | ○ | ○ | ○ | ○ | ○ |

### [Table 3]

**Table 3**

| | | | | Comparative Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Surface-modifying sheet | Surface-modifying layer | Polymeric component | | 8 | 8 | 8 | 9 | 10 | 11 | 12 | 13 | 21 | 22 | 23 | 24 |
| | | Thickness | | 25 µm | | | | | | | | | | | |
| | Release sheet | PTFE | Product number | Nitoflon No. 900 UL | | | | | | | | | | | |
| | | Thickness | | 50 µm | | | | | | | | | | | |
| Resin member | | Resin type | | Unsaturated polyester resin | | | | | | | | | | | |
| | | Product number | | Kyocera Premix AP212SK2 | | | | | | | | | | | |
| Condition for shaping surface-modified member | | Temperature | Upper mold | 145°C | | | | | | | | | | | |
| | | | Lower mold | 135°C | | | | | | | | | | | |
| | | Time | | 4 minutes | | | | | | | | | | | |
| | | Pressure | | 3 MPa | | | | | | | | | | | |
| Coating film | | Urethane coating material | Product number | V-Top H | | Water-based V-Top | V-Top H | | | | | | | | |
| | | Thickness | | 25 µm | | | | | | | | | | | |
| | | Curing condition | Temperature | RT | | | | | | | | | | | |
| | | | Time | 3 days | | | | | | | | | | | |
| | | Storage of coated article in high-temperature and high-humidity environment (85°C, 85% RH, 1 dav) | | - | Yes | - | - | - | - | - | - | - | - | - | - |
| Adhesion | Crosscut peeling | Adhesion 1 resin member/surface-modifying layer | Attached number (pieces/100 pieces) | 100 | 100 | 100 | 100 | 100 | 100 | 100 | 100 | 0 | 0 | 33 | 24 |
| | | | Evaluation | ○ | ○ | ○ | ○ | ○ | ○ | ○ | ○ | X | X | X | X |
| | | Adhesion 2 surface-modifying layer/coating film | Attached number (pieces/100 pieces) | 46 | 1 | 3 | 0 | 0 | 0 | 0 | 0 | 100 | 100 | 100 | 100 |
| | | | Evaluation | x | x | x | x | x | x | x | x | ○ | ○ | ○ | ○ |

The materials shown in Tables 1 to 3 are as follows.
2EHA: 2-ethylhexyl acrylate
BA: butyl acrylate
EA: ethyl acrylate
HEA: 2-hydroxyethyl acrylate
MOI: 2-methacryloyloxyethyl isocyanate (trade name: "Karenz MOI", manufactured by SHOWA DENKO K.K)
PTFE: polytetrafluoroethylene
V-Top H: V-Top H (two-pack type curable urethane coating material) manufactured by Dai Nippon Toryo Co., Ltd.
Water-based V-Top: water-based V-Top H (two-pack type curable urethane coating material) manufactured by Dai Nippon Toryo Co., Ltd.

The coated article using the surface-modifying sheet according to the present invention was good in both the adhesion between the resin member and the surface-modifying layer and the adhesion between the surface-modifying layer and the coating film, and a coated article having very high bonding strength of the coating film is obtained. On the other hand, in the coated articles of Comparative Examples 1 to 8, the molar ratio of the unsaturated hydrocarbon group-containing compound to the hydroxyl group-containing monomer is 0.5 or more, and an amount of hydroxyl groups of the polymeric component is insufficient, and therefore a sufficient bond is not formed between the surface-modifying layer and the coating film, resulting in poor adhesion between the surface-modifying layer and the coating film.

### INDUSTRIAL APPLICABILITY

A surface-modifying layer according to an embodiment of the present invention has excellent bonding strength, prevents an occurrence of unevenness, and is smooth with a uniform thickness, a surface-modifying sheet according to the embodiment of the present invention can form the surface-modifying layer, and can integrally shape the surface-modifying layer and a resin member when a surface-modified member is formed.

While the invention has been described in detail and with reference to specific embodiments thereof, it will be apparent to one skilled in the art that various changes and modifications can be made therein without departing from the spirit and scope thereof.

The present application is based on Japanese Patent Application (Japanese Patent Application No. 2021 - 055600) filed on March 29, 2021, and the contents of which are incorporated herein by reference.

### REFERENCE SIGNS LIST

10 surface-modifying layer
20 release sheet
30 coating film
100 resin member
200 surface-modifying sheet
300 coated article
400 resin material

## Claims

1. A surface-modifying layer comprising:
a polymeric component having a hydroxyl group and an unsaturated hydrocarbon group, wherein
a molar ratio of the unsaturated hydrocarbon group to the hydroxyl group is 0.01 or more and less than 1.

2. The surface-modifying layer according to claim 1, comprising:
the polymeric component having the hydroxyl group and the unsaturated hydrocarbon group, wherein
the molar ratio of the unsaturated hydrocarbon group to the hydroxyl group is 0.01 or more and less than 0.5.

3. The surface-modifying layer according to claim 1 or 2, wherein
the unsaturated hydrocarbon group is a functional group derived from an unsaturated hydrocarbon group-containing isocyanate compound.

4. The surface-modifying layer according to claim 3, wherein
the unsaturated hydrocarbon group-containing isocyanate compound is 2-methacryloyloxyethyl isocyanate.

5. A surface-modifying sheet comprising:
the surface-modifying layer according to any one of claims 1 to 4 and a release sheet.

6. A laminate, wherein
the surface-modifying layer according to any one of claims 1 to 4 is laminated to at least a part of a surface of a resin material.

7. A surface-modified member, wherein
the surface-modifying layer according to any one of claims 1 to 4 is laminated to at least a part of a surface of a resin member, and
the resin member and the surface-modifying layer are covalently bonded by a chemical reaction.

8. The surface-modified member according to claim 7, wherein
the resin member comprises an unsaturated hydrocarbon group-containing heat-curable resin.

9. The surface-modified member according to claim 8, wherein
the unsaturated hydrocarbon group-containing heat-curable resin is an unsaturated polyester resin.

10. A coated article, wherein
a coating film is provided to at least a part of the surface-modified member according to any one of claims 7 to 9.

11. The coated article according to claim 10, wherein
the coating film comprises a coating material having a functional group that forms a chemical bond or interacts intermolecularly with the hydroxyl group.

12. A method for producing a surface-modified member using the surface-modifying layer according to any one of claims 1 to 4, the method comprising:
a lamination step of laminating the surface-modifying layer to a resin member by heating and shaping.

13. The method for producing a surface-modified member according to claim 12, wherein
the resin member contains an unsaturated polyester resin.

14. A method for producing a surface-modified member using the surface-modifying sheet according to claim 5.

15. A method for producing a coated article using the surface-modifying layer according to any one of claims 1 to 4, the method comprising:
a step of producing a surface-modified member by laminating the surface-modifying layer on a resin member by heating and shaping, and
a step of forming a coating film on a surface-modifying-layer side of the surface-modified member.

16. The method for producing a coated article according to claim 15, wherein
the resin member contains an unsaturated polyester resin.

17. The method for producing a coated article according to claim 15 or 16, wherein
the coating film contains a coating material having a functional group that forms a chemical bond or interacts intermolecularly with the hydroxyl group.

18. A method for producing a coated article using the surface-modifying sheet according to claim 5.
